# EUROPEAN PATENT APPLICATION

(11) **EP 4 358 256 A1**
(43) Date of publication of application: **24.04.2024**
(21) Application number: 23820019.0
(22) Date of filing: 23.05.2023
(51) Int. Cl.: H01M 50/24, H01M 50/22, H01M 50/244, H01M 50/238, H01M 50/204, A62C 3/16, A62C 99/00

(54) **BATTERY MODULE ASSEMBLY HAVING FIRE EXTINGUISHING FUNCTION, AND BATTERY PACK COMPRISING SAME**

(30) Priority: 10.06.2022 KR 20220070943
(71) Applicant: LG Energy Solution, Ltd., Seoul 07335 (KR)
(72) Inventor: SEON, Sang Ok, Daejeon 34122 (KR)
(74) Representative: Plasseraud IP
(86) International application number: PCT/KR2023/006956
(87) International publication number: WO 2023/239083

(57) **Abstract**

The present invention relates to a battery module assembly having a fire-extinguishing function and a battery pack including the same, and more particularly to a battery module assembly including a battery module having a plurality of battery cells received therein, a fire detection sensor provided outside the battery module, a cover member configured to receive the battery module and the fire detection sensor, and a pump connected to the cover member, the pump being configured to discharge air in the cover member to an outside of the cover member upon receiving a fire signal from the fire detection sensor, and a battery pack including the same.

## Description

### [Technical Field]

This application claims the benefit of priority to Korean Patent Application No. 2022-0070943 filed on June 10, 2022, the disclosure of which is incorporated herein by reference in its entirety.

The present invention relates to a battery module assembly having a fire-extinguishing function and a battery pack including the same, and more particularly to a battery module assembly having a fire-extinguishing function capable of preventing fire from spreading to a neighboring battery module assembly when fire breaks out in the battery module assembly and a battery pack including the same.

### [Background Art]

With recent development of alternative energies due to air pollution and energy depletion caused as the result of use of fossil fuels, demand for secondary batteries capable of storing electrical energy that is produced has increased. Secondary batteries, which are capable of being charged and discharged, are intimately used in daily life. For example, secondary batteries are used in mobile devices, electric vehicles, and hybrid electric vehicles.

Required capacities of secondary batteries used as energy sources of various kinds of electronic devices inevitably used in modern society have been increased due to an increase in usage of mobile devices, increasing complexity of the mobile devices, and development of electric vehicles. In order to satisfy demand of users, a plurality of battery cells is disposed in a small-sized device, whereas a battery module including a plurality of battery cells electrically connected to each other or a battery pack including a plurality of battery modules is used in a vehicle, etc.

Meanwhile, a battery cell may be subjected to high temperature or fire may break out in the battery cell due to various causes, such as overcharging, overcurrent, or external impact, and high temperature or fire may spread to a neighboring battery cell or battery module, whereby secondary damage may occur.

In order to prevent such secondary damage, therefore, there is a need for an excellent battery having a function to extinguish fire at an early stage.

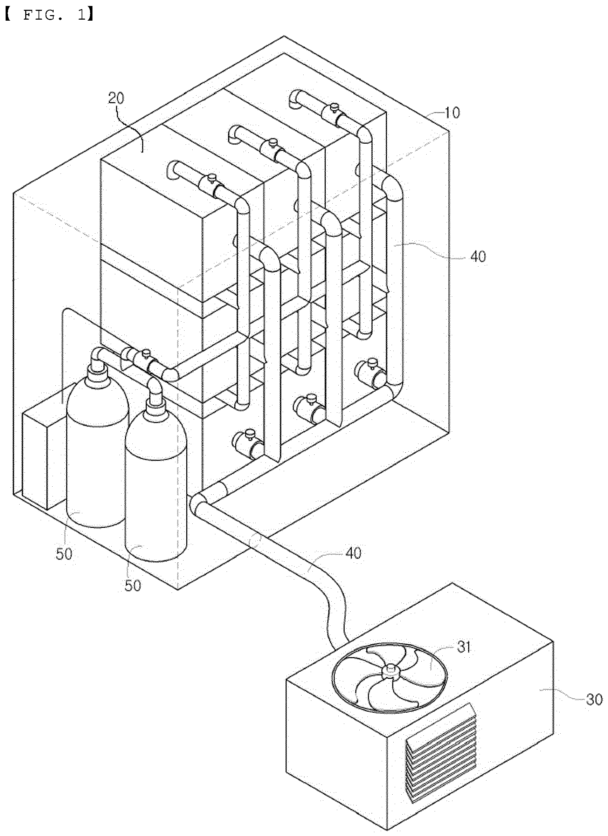

FIG. 1 is a perspective view showing a conventional battery storage system. As shown in FIG. 1, the conventional battery storage system includes a storage box 10, a receiving unit 20 configured to receive a battery, a vacuum pump 30, an exhaust pipe 40 configured to connect the receiving unit 20 and the vacuum pump 30 to each other, and a fire extinguishing unit 50 configured to extinguish fire.

In the conventional battery storage system, the receiving units 20, in each of which the battery is received, are connected to the vacuum pump 30 via the exhaust pipe 40, and when fire outbreak is detected in the receiving unit 20, the vacuum pump 30 is operated to create a vacuum in the receiving unit 20, thereby primarily extinguishing fire.

Since a plurality of receiving units 20 is connected to a single vacuum pump 30, however, it is difficult to individually manage the receiving units 20.

In addition, the receiving unit 20 not only requires a large installation space because it is difficult to change the shape thereof but also is not easy to maintain in a vacuum state, and has particular difficulty discharging heat generated from the battery cell.

### (Prior Art Document)

(Patent Document 1) Korean Registered Patent Publication No. 2297771

### [Disclosure]

### [Technical Problem]

The present invention has been made in view of the above problems, and it is an object of the present invention to provide a battery module assembly having a fire-extinguishing function capable of extinguishing fire in the battery module assembly when fire breaks out in a battery cell received in the battery module assembly, thereby preventing the fire from spreading to a neighboring battery module assembly, and a battery pack including the same.

It is another object of the present invention to provide a battery module assembly having a fire-extinguishing function capable of reliably discharging air in the vicinity of a battery module and furthermore improving space utilization and a battery pack including the same.

It is a further object of the present invention to provide a battery module assembly having a fire-extinguishing function configured to have a structure capable of discharging generated heat to the outside when a battery module is normally operated and a battery pack including the same.

### [Technical Solution]

A battery module assembly having a fire-extinguishing function according to the present invention to accomplish the above objects includes a battery module (100) having a plurality of battery cells received therein, a fire detection sensor (200) provided outside the battery module (100), a cover member (300) configured to receive the battery module (100) and the fire detection sensor (200), and a pump (400) connected to the cover member (300), the pump being configured to discharge air in the cover member (300) to an outside of the cover member upon receiving a fire signal from the fire detection sensor (200).

Also, in the battery module assembly according to the present invention, the cover member (300) may include a cover body (310) and an extension portion (320) configured to connect the cover body (310) and the pump (400) to each other.

Also, in the battery module assembly according to the present invention, one side of the battery module (100) may have a connection portion (500) comprising a busbar or a wire extending a predetermined length, and the cover body (310) may have a through-hole (311) configured to allow the connection portion (500) to be exposed to the outside therethrough.

Also, in the battery module assembly according to the present invention, the cover body (310) may have an opening (312) for entry and exit of the battery module (100), and the opening (312) may have an opening and closing door (330) .

Also, in the battery module assembly according to the present invention, the opening and closing door (330) may be larger than the opening (312), and a part of the opening and closing door may be fixed to an outer surface of the cover body (310).

Also, in the battery module assembly according to the present invention, the opening and closing door (330) may be a check valve door configured such that the opening (312) is closed when the pump (400) suctions air from the cover member (300) and the opening (312) is opened when the pump (400) supplies outside air into the cover member (300).

Also, in the battery module assembly according to the present invention, each of the cover body (310) and the extension portion (320) may include a heat-resistant or flame-resistant material.

Also, in the battery module assembly according to the present invention, each of the cover body (310) and the extension portion (320) may be flexible.

Also, in the battery module assembly according to the present invention, each of the cover body (310) and the extension portion (320) may include at least one of a bromine-based flame retardant, silicone, polyvinyl chloride, polystyrene, an ABS resin, and polyethylene terephthalate.

In addition, the present invention provides a battery pack including a plurality of battery module assemblies having the above-described features.

In addition, a method of operating the battery pack according to the present invention includes a first step of monitoring whether fire outbreak has been detected using the fire detection sensor provided in each battery module assembly and a second step of discharging air in a corresponding one of the battery module assemblies to the outside when fire outbreak has been detected.

Also, in the method of operating the battery pack according to the present invention, a step of supplying outside air to each battery module assembly may be performed in conjunction with the first step.

### [Advantageous Effects]

As is apparent from the above description, a battery module assembly according to the present invention has an advantage in that, when fire breaks out, a pump creates a vacuum in a cover member to extinguish fire, thereby preventing secondary damage such as fire spread.

In addition, the cover member of the battery module assembly according to the present invention is made of a material having elasticity and flexibility, whereby space utilization is improved, which contributes to the improvement of energy density, and an excellent sealing effect is also achieved, whereby reliable fire extinguishment is secured.

Furthermore, the cover member of the battery module assembly according to the present invention is provided with an opening and an opening and closing door, whereby a structure in which air can be circulated during normal operation of a battery module is provided, and therefore it is possible to minimize lowering in cooling performance.

### [Description of Drawings]

FIG. 1 is a perspective view showing a conventional battery storage system.
FIG. 2 is a perspective view showing the state in which a battery module according to the present invention is received in a cover member.
FIG. 3 is a perspective view of a cover member according to the present invention when viewed in one direction.
FIG. 4 is a perspective view of the cover member shown in FIG. 3 when viewed in the other direction.
FIG. 5 is a perspective view of a battery pack according to the present invention.
FIG. 6 is a flowchart illustrating a method of operating the battery pack according to the present invention.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part in the entire specification, not only may the one part be directly connected to the other part, but also, the one part may be indirectly connected to the other part via a further part. In addition, that a certain element is included does not mean that other elements are excluded, but means that such elements may be further included unless mentioned otherwise.

Hereinafter, a battery module assembly having a fire-extinguishing function according to the present invention and a battery pack including the same will be described with reference to the accompanying drawings.

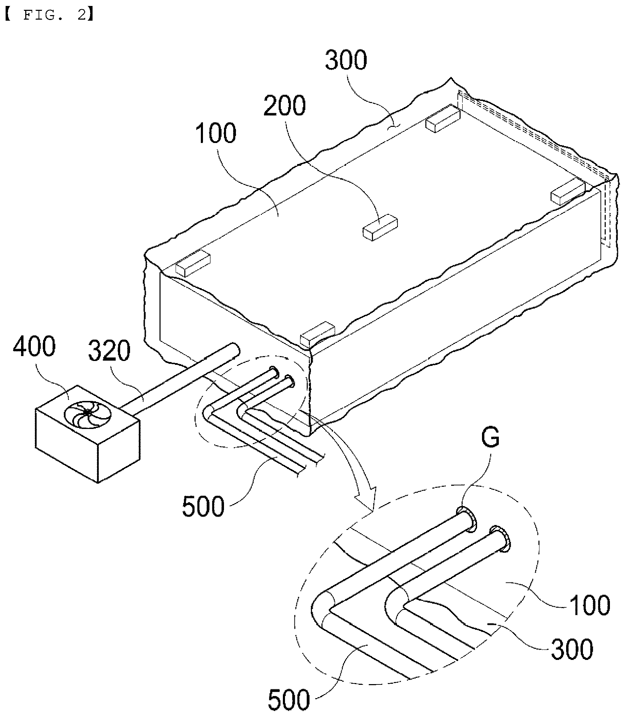

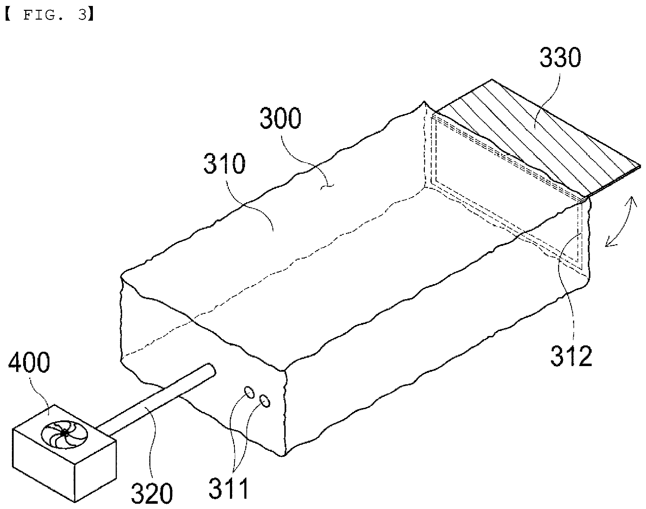

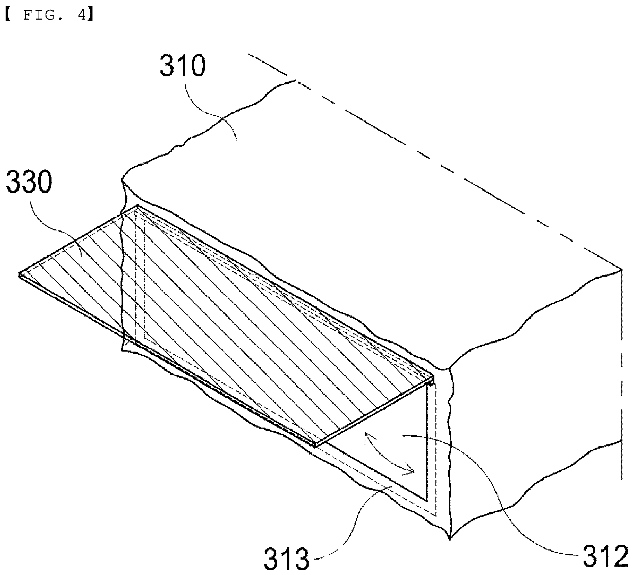

FIG. 2 is a perspective view showing the state in which a battery module according to the present invention is received in a cover member, FIG. 3 is a perspective view of a cover member according to the present invention when viewed in one direction, and FIG. 4 is a perspective view of the cover member shown in FIG. 3 when viewed in the other direction.

As shown in FIGS. 2 to 4, a battery module assembly according to the present invention includes a battery module 100, a fire detection sensor 200, a cover member 300, a pump 400, and a connection portion 500.

First, the battery module 100 is configured such that a plurality of battery cells is connected to each other in series or in parallel via a busbar in a state of being received in a module case.

Here, each of the battery cells includes a cell assembly, a cell case configured to receive the cell assembly, and a pair of leads.

The cell assembly may be a jelly-roll type cell assembly, which is configured to have a structure in which a long sheet type positive electrode and a long sheet type negative electrode are wound in the state in which a separator is interposed therebetween, a stacked type cell assembly including unit cells, each of which is configured to have a structure in which a rectangular positive electrode and a rectangular negative electrode are stacked in the state in which a separator is interposed therebetween, a stacked and folded type cell assembly, which is configured to have a structure in which unit cells are wound using a long separation film, or a laminated and stacked type cell assembly, which is configured to have a structure in which unit cells are stacked in the state in which a separator is interposed therebetween and are then attached to each other; however, the present invention is not limited thereto.

The cell assembly is mounted in a cell case, and the cell case is generally configured to have a laminate sheet structure including an inner layer, a metal layer, and an outer layer. The inner layer is disposed in direct contact with the cell assembly, and therefore the inner layer must exhibit high insulation properties and high resistance to an electrolytic solution. In addition, the inner layer must exhibit high sealability in order to hermetically seal the cell case from the outside, i.e. a thermally-bonded sealed portion between inner layers must exhibit excellent thermal bonding strength. The inner layer may be made of a material selected from among a polyolefin-based resin, such as polypropylene, polyethylene, polyethylene acrylate, or polybutylene, a polyurethane resin, and a polyimide resin, which exhibit excellent chemical resistance and high sealability. However, the present invention is not limited thereto, and polypropylene, which exhibits excellent mechanical properties, such as tensile strength, rigidity, surface hardness, and impact resistance, and excellent chemical resistance, is the most preferably used.

The metal layer, which is disposed so as to abut the inner layer, corresponds to a barrier layer configured to prevent moisture or various kinds of gas from permeating into the battery from the outside. An aluminum thin film, which is lightweight and easily shapeable, may be used as a preferred material for the metal layer.

The outer layer is provided on the other surface of the metal layer. The outer layer may be made of a heat-resistant polymer that exhibits excellent tensile strength, resistance to moisture permeation, and resistance to air transmission such that the outer layer exhibits high heat resistance and chemical resistance while protecting the cell assembly. As an example, the outer layer may be made of nylon or polyethylene terephthalate; however, the present invention is not limited thereto.

Meanwhile, the leads, which include a positive electrode lead and a negative electrode lead, are electrically connected to a positive electrode tab and a negative electrode tab of the cell assembly and are exposed outwards from the case. The battery cell corresponds to generally known constructions, and therefore a more detailed description thereof will be omitted.

At least one fire detection sensor 200 may be located outside or inside the battery module 100 to detect fire breaking out in the battery cells of the battery module 100 and to transmit a measured signal to an external controller (not shown) in a wired or wireless fashion.

Although FIG. 2 shows the fire detection sensor 200 as being located at an upper surface of the battery module 100, which is merely an example, it is obvious that the fire detection sensor may be located at a side surface of the battery module as long as it is possible to detect fire breaking out in the battery module 100.

Here, the fire detection sensor 200 may be classified into several types, such as a differential fire detector, a constant temperature fire detector, and a photoelectric smoke detector, based on the operation method thereof.

The differential fire detector is a type of fire detector that detects a rise in temperature, and when the rise rate of the detected temperature per unit time is equal to or greater than a reference value, the differential fire detector determines that fire has broken out and sends out a fire outbreak signal. The differential fire detector is classified into Class 1, Class 2, and Class 3 according to sensitivity and performance, and is also classified into a spot type and a distribution type according to the physical range area that can be detected.

The constant temperature fire detector is a fire detector that is operated when the temperature thereof reaches a certain level, and is classified into bimetallic and detection line types. The bimetallic type fire detector sends a signal by moving a contact using thermal deformation of a bimetal, and the detection line type fire detector uses two piano wires as detection lines with plastic as the boundary and sends a signal by contact between the piano wires occurring as the result of melting of plastic when fire breaks out.

The photoelectric smoke detector is a fire detector that is operated when smoke generated at the time of fire outbreak is introduced into the detector to scatter infrared light emitted from a light-emitting diode provided in the detector, whereby the amount of light received by a photoelectric element is changed. The photoelectric smoke detector is used in a place in which faster detection is required, such as an indoor space which is sealed and in which incomplete combustion easily occurs, for example, a warehouse, or a place related to electricity.

The differential fire detector, the constant temperature fire detector, and the photoelectric smoke detector are merely examples, and any other sensors may be used without limitation as long as it is possible to detect fire that breaks out in the battery module 100.

It is preferable for the fire detector to be powered by the battery module.

Next, the cover member 300 will be described. The cover member 300 includes a cover body 310, an extension portion 320, and an opening and closing door 330.

First, the inside of the cover body 310 is empty in order to wrap the outside of the battery module 100, and it is preferable for the cover body to be flexible such that air in the vicinity of the battery module 100 can be easily discharged.

In addition, the cover body 310 is provided with one or more through-holes 311, an opening 312, and a support portion 313. Specifically, the one or more through-holes 311 are provided in one side surface of the cover body 310 in order to expose the connection portion 500 electrically connected to the battery module 100, such as a busbar or a wire, to the outside.

The opening 312 is located at the other side surface of the cover body 310, corresponds to a doorway for receiving or removing the battery module 100, and is also utilized as an outlet for air circulation when the battery module is normally operated.

Here, the area of the opening 312 is not particularly limited, but is sufficient to allow the battery module 100 to enter and exit therethrough.

The support portion 313 is located at an inner surface or an outer surface of the cover body 310 along an edge of the opening 312, and is preferably a flat plate made of a material that is heat resistant, has a certain strength or higher, and has small shape deformation, such as metal or silicone.

When the support portion 313 is configured as described above, it is advantageous to fix a part of the opening and closing door 330, and furthermore, when air is discharged from the cover body 310, the cover body 310 and the opening and closing door 330 may be brought into tight contact with each other, which may contribute to rapid fire suppression.

Next, one side of the extension portion 320 extends a predetermined length outwards from one side of the cover body 310, and the pump 400 is connected to the other side of the extension portion. The extension portion 320 serves as a passageway for air to be supplied into or discharged from the cover body 310.

Meanwhile, it is preferable for each of the cover body 310 and the extension portion 320 to be made of a heat-resistant or flame-resistant material capable of minimizing damage even when fire breaks out in the battery module 100. Specifically, the material for each of the cover body and the extension portion may include at least one of a bromine-based flame retardant, silicone, polyvinyl chloride, polystyrene, an ABS resin, and polyethylene terephthalate, but is not limited to these materials as long as the same function can be performed.

The opening and closing door 330 is provided at the other side surface of the cover body 310, i.e. in the vicinity of the opening 312. More specifically, the opening and closing door 320 is larger than the area of the opening 312, and an upper edge of the opening and closing door is fixed to an outer surface of the support portion 313 while the remaining edge thereof is not fixed.

Consequently, the opening and closing door 330 is operated similarly to a check valve in that the opening 312 is closed when the pump 400 suctions air from the cover member 300 and conversely, the opening 312 is opened when the pump 400 supplies outside air into the cover member 300.

Here, the opening and closing door 330 and the support portion 313 may be fixed to each other using any known coupling means, such as an adhesive, a tape, or a hinge; however, the method of fixing the opening and closing door 330 and the support portion 313 to each other is not particularly limited as long as the opening and closing door and the support portion can be fixed to each other.

In addition, although the upper edge of the opening and closing door 330 is shown as being fixed to the support portion 313 in FIGS. 3 and 4, a lower edge or a side edge of the opening and closing door may be fixed to the support portion 313.

In the same manner as the support portion 313, it is preferable for the opening and closing door 330 to be a flat plate made of a material that is heat resistant, has a certain strength or higher, and has small shape deformation, such as metal or silicone.

Next, the pump 400 is connected to the other end of the extension portion 320 to discharge air in the cover body 310 to the outside such that the interior of the cover body 310 is under vacuum or to introduce outside air into the cover body 310 such that heat generated from the battery module 100 is discharged to the outside.

The connection portion 500, which is configured to electrically connect a device requiring power or a plurality of battery modules 100, may be constituted by a busbar or a wire. One side of the connection portion is connected to the battery modules 100, and the other side of the connection portion is exposed to the outside through each of the through-holes 311 of the cover body 310.

In addition, when it is necessary to transmit information measured by the fire detection sensor 200 to a controller (not shown) located outside in a wired fashion, a signal transmission cable (not shown) may be further included in the connection portion 500.

Meanwhile, in order to maintain airtightness of the cover body 310, it is preferable for a sealing adhesive G to be applied or attached to the part at which the through-hole 311 and the connection portion 500 are in contact, and it is more preferable for any one of an epoxy resin and silicone, which are heat-resistant materials, to be used; however, the material for the sealing adhesive is not limited to these materials as long as the same function can be performed.

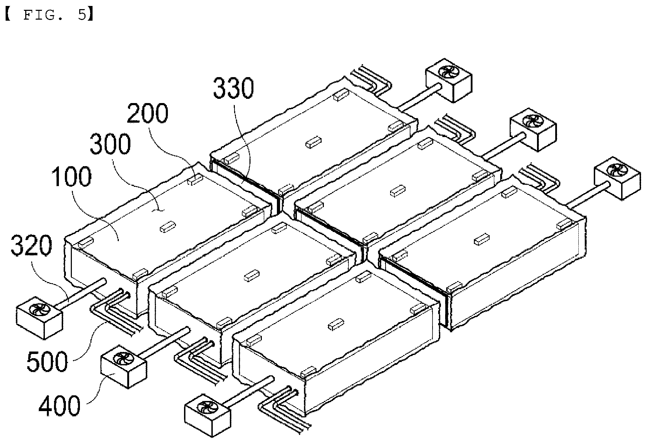

FIG. 5 is a perspective view of a battery pack according to the present invention. Referring to FIG. 5, the battery pack according to the present invention may be a battery pack including a plurality of battery module assemblies, one of which has been described with reference to FIGS. 2 to 4.

As shown in FIG. 5, the battery pack according to the present invention may be configured such that a plurality of battery module assemblies disposed side by side is arranged in two rows, wherein opening and closing doors 330 of the respective battery module assemblies may be located so as to face each other.

Although FIG. 5 shows the battery pack as including six battery module assemblies, which is merely an example, it is obvious that the number of battery module assemblies may be varied depending on the amount of power required by a device.

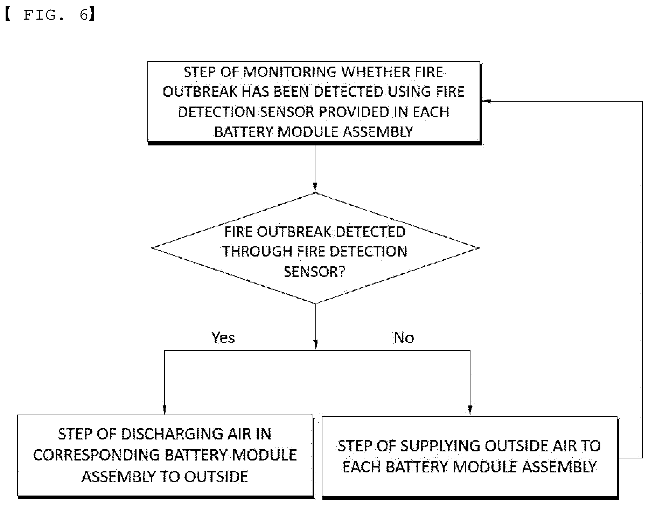

FIG. 6 is a flowchart illustrating a method of operating the battery pack according to the present invention.

Referring to FIG. 6, the method of operating the battery pack may include a first step of monitoring whether fire outbreak has been detected using the fire detection sensor provided in each battery module assembly and a second step of discharging air in a corresponding one of the battery module assemblies to the outside when fire outbreak has been detected.

First, the first step of monitoring whether fire outbreak has been detected using the fire detection sensor provided in each battery module assembly is a step of checking and monitoring whether fire has broken out in a battery module through a fire detection sensor located outside the battery module.

Upon determining through the fire detection sensor that the battery module is normally operated, the pump provided at each of the battery module assemblies suctions outside air and supplies the suctioned air to the cover member in order to discharge heat generated from the battery module to the outside. At this time, an opening and closing door may be kept naturally open due to the pressure of the air supplied to the cover member, whereby the battery module is cooled.

Meanwhile, setting may be performed such that outside air can be continuously supplied into the cover member, or control may be performed such that outside air can be supplied only when the temperature reaches a certain level or higher.

The second step of discharging air from a corresponding one of the battery module assemblies to the outside when fire outbreak has been detected is a step of blocking oxygen necessary for fire to extinguish fire.

Specifically, when fire outbreak is detected by the fire detection sensor, a fire detection signal is transmitted to the controller, and the controller operates the pump of a corresponding one of the battery module assemblies in order to suction air from the cover member and to discharge the suctioned air to the outside.

At this time, the opening and closing door is brought into tight contact with the opening to block introduction of outside air, and air is discharged from the cover member, whereby fire is extinguished.

Those skilled in the art to which the present invention pertains will appreciate that various applications and modifications are possible within the category of the present invention based on the above description.

### (Description of Reference Symbols)

100: Battery module
200: Fire detection sensor
300: Cover member
310: Cover body
311: Through-hole 312: Opening
313: Support portion
320: Extension portion
330: Opening and closing door
400: Pump
500: Connection portion
G: Sealing adhesive

## Claims

1. A battery module assembly comprising:
a battery module having a plurality of battery cells received therein;
a fire detection sensor provided outside the battery module;
a cover member configured to receive the battery module and the fire detection sensor; and
a pump connected to the cover member, the pump being configured to discharge air in the cover member to an outside of the cover member upon receiving a fire signal from the fire detection sensor.

2. The battery module assembly according to claim 1, wherein the cover member comprises:
a cover body; and
an extension portion configured to connect the cover body and the pump to each other.

3. The battery module assembly according to claim 2, wherein one side of the battery module has a connection portion comprising a busbar or a wire extending a predetermined length, and
wherein the cover body has a through-hole configured to allow the connection portion to be exposed to the outside therethrough.

4. The battery module assembly according to claim 3, wherein the cover body has an opening for entry and exit of the battery module, and
wherein the opening has an opening and closing door.

5. The battery module assembly according to claim 4, wherein the opening and closing door is larger than the opening, and
wherein a part of the opening and closing door is fixed to an outer surface of the cover body.

6. The battery module assembly according to claim 5, wherein the opening and closing door is a check valve door configured such that the opening is closed when the pump suctions air from the cover member and the opening is opened when the pump supplies outside air into the cover member.

7. The battery module assembly according to claim 2, wherein each of the cover body and the extension portion comprises a heat-resistant or flame-resistant material.

8. The battery module assembly according to claim 7, wherein each of the cover body and the extension portion is flexible.

9. The battery module assembly according to claim 2, wherein each of the cover body and the extension portion comprises at least one of a bromine-based flame retardant, silicone, polyvinyl chloride, polystyrene, an ABS resin, and polyethylene terephthalate.

10. A battery pack comprising the battery module assembly according to any one of claims 1 to 9, wherein the battery module assembly is provided in plural.

11. A method of operating the battery pack according to claim 10, the method comprising:
a first step of monitoring whether fire outbreak has been detected using the fire detection sensor provided in each battery module assembly; and
a second step of discharging air in a corresponding one of the battery module assemblies to the outside when fire outbreak has been detected.

12. The method according to claim 11, wherein a step of supplying outside air to each battery module assembly is performed in conjunction with the first step.
